(19) Europäisches Patentamt / European Patent Office / Office européen des brevets

(11) **EP 3 406 492 B1**

(12) **EUROPEAN PATENT SPECIFICATION**

(45) Date of publication and mention
of the grant of the patent:
**30.09.2020  Bulletin 2020/40**

(51) Int Cl.:
**B60R 19/26** (2006.01)       **F16F 7/10** (2006.01)

(21) Application number: **18460028.6**

(22) Date of filing: **10.05.2018**

(54) **DEVICE FOR ABSORBING AND TRANSFORMING KINETIC ENERGY**

VORRICHTUNG ZUM ABSORBIEREN UND TRANSFORMIEREN VON KINETISCHER ENERGIE

DISPOSITIF D'ABSORPTION ET DE TRANSFORMATION D'ÉNERGIE CINÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.05.2017  PL 42166017**

(43) Date of publication of application:
**28.11.2018  Bulletin 2018/48**

(73) Proprietor: **Prytko, Leon
58-530 Kowary (PL)**

(72) Inventors:
• **Prytko, Leon
58-530 Kowary (PL)**
• **Prytko, Andrzej
58-530 Kowary (PL)**
• **Jaworski, Wojciech
58-530 Kowary (PL)**
• **Pazurek, Sebastian
96-100 Skiemiewice (PL)**

(56) References cited:
**EP-A2- 2 420 674        WO-A1-2004/053352
WO-A1-2012/093947      CN-B- 103 121 509**

**Description**

The subject of the invention is a device for absorbing and transforming the kinetic energy of a moving object into the kinetic energy of rotational motion, in cases of collision or sudden stop.

The invention is applicable in eliminating, or significantly reducing, the negative effects of mutual collisions of moving objects, the collision of such objects with fixed obstacles, as well as in situations with sudden stops. It works to control the course of loads during these events. Eliminating and/or reducing the effects of collisions of moving objects is an extremely important technical issue. The value of this device increases exponentially with the speed of the vehicle. Shields and massive bumpers attached to the frames were designed to primarily protect vehicles. Gradually, the protection of vehicles against the effects of collisions became less important and the protection of peoples' health and life became an increasingly important issue. Hence, the efforts of manufacturers to improve safety lead to technical solutions relating to: controlled crumple zones of vehicles, seat belts, head restraints, airbags and other solutions that protect the health and lives of drivers and passengers.

There are also known technical solutions involving the transformation of the kinetic energy of a moving object to take over, accumulate, absorb, or dissipate the energy of a collision. In these solutions, the principle of the kinetic energy of the translational motion and the kinetic energy of the rotational motion, resulting from the general laws of physics, is used in accordance with the known equations:

$$Ekrp = Ekro; \quad Ek = \tfrac{1}{2}\,m\,V^2 = \tfrac{1}{2}\,i\,\omega^2$$

where:

Ekrp - kinetic energy of the translational motion,
Ekro - kinetic energy of rotary motion,
Ek - kinetic energy,
m - mass of the object,
V - linear speed of the object,
i - the moment of inertia of the rotor (rotating element),
$\omega$ - angular speed of the rotor.

EP 2 420 674 A2 discloses a device for absorbing and transforming kinetic energy according to the preamble of claim 1. Polish Patent No. PL214514 is a rotor collision energy device equipped 25 with: a hammer connected to a cushioning element with toothed gears. These gears are meshed with gear wheels that are coupled to rotors constituting, as described, rotational kinetic energy accumulators with a defined moment of inertia. The beater element has the form of a beam, and is equipped with guides mounted perpendicularly. They are then 30 connected by a stiffening connector and slid-able mounting in the holes of the body plate.

In patent databases, there are a number of other applications involving kinetic energy transfer, in which a gear transmission in the form of a toothed rack and a gear wheel coupled with a rotor element is a repetitive and basic element of the device. These applications differ primarily in the use of these inventions, namely in: road barriers, port quays, carriages buffers and other facilities.

The Polish patent application No. 356257 presents a device consisting of two blocks with U-shaped notches. The projections of both blocks have the same height and are finished with rollers and between them the pull rod on the accumulator discs is unrolled.

In turn, the use of cushioning elements in the presented devices may significantly hinder the calculation of strength and the ability to convert energy with a large variation in the speed of moving vehicles and other objects in motion.

A further step in transforming the kinetic energy of the translational motion into the kinetic energy of the rotary motion, in the event of collisions or sudden stops where no cushioning elements are present, are gears of variable transmission. These gears, in the initial zone of the section on which the object stops, have the smallest ratio. This means a relatively small overload at the moment of impact. The transmission ratio increases smoothly to the maximum, thanks to which the rotating elements take up the entire kinetic energy of the object to the end of its stopping path. Examples of such a solution are described in patent description under number P.408439.

The disadvantage of this screw-shaped solution is that the screw in question must possess precise grooving. Inaccurate work can affect the correctness and efficiency of the device.

In order to eliminate this drawback, a device for transforming the kinetic energy of a moving object into the kinetic energy of a rotary motion according to claim 1 has been developed. This is provided with a gear that has variable, increasing ratio contrasted with an element whose peripheral surface has a spiral shape; and a second element whose cooperating surface has a shape half of a parabola. This parabola also serves as a bumper. The element with a spiral contour is coupled through a one-way clutch with a rotating element, which will be accelerated from zero to the maximum speed in the section of the planned road stop.

The presented method and apparatus for converting energy allow a controlled course of the retention process. The invention allows for the precise design of the device for different stop speeds of the object, its mass, and for the assumed stopping path. The invention makes it possible to calculate assuming various stop parameters such as constant or variable overload with negative acceleration of the object. It is possible to calculate the process of stopping the object at the assumed distance of braking distance, eliminating the phenomenon of the object's reflection from the obstacle, because all kinetic energy will be transformed and transferred to the rotating assembly. It is possible to design the object to be stopped at different times, whereby the time may be several times longer than the time of deceleration through a typical zone of controlled crumpling. The advantage of the presented solution is its flexibility because, regardless of the speed of the object, all energy is transformed and transferred to the rotating assembly.

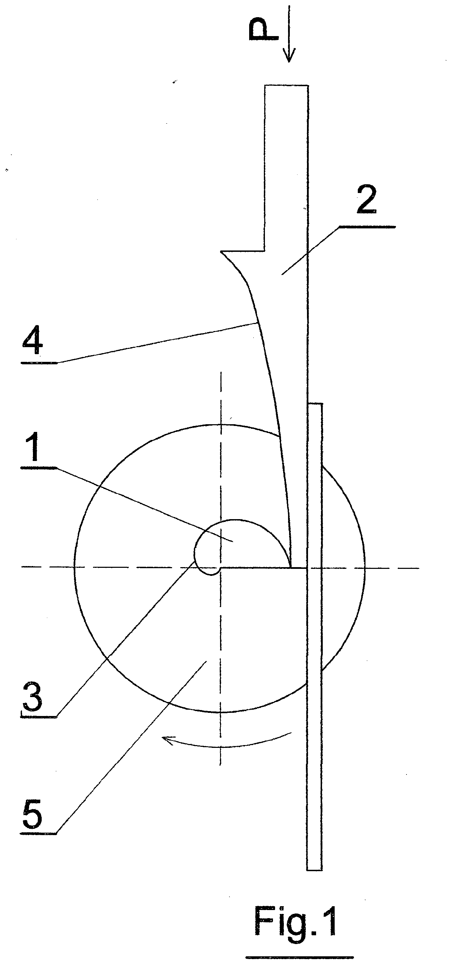

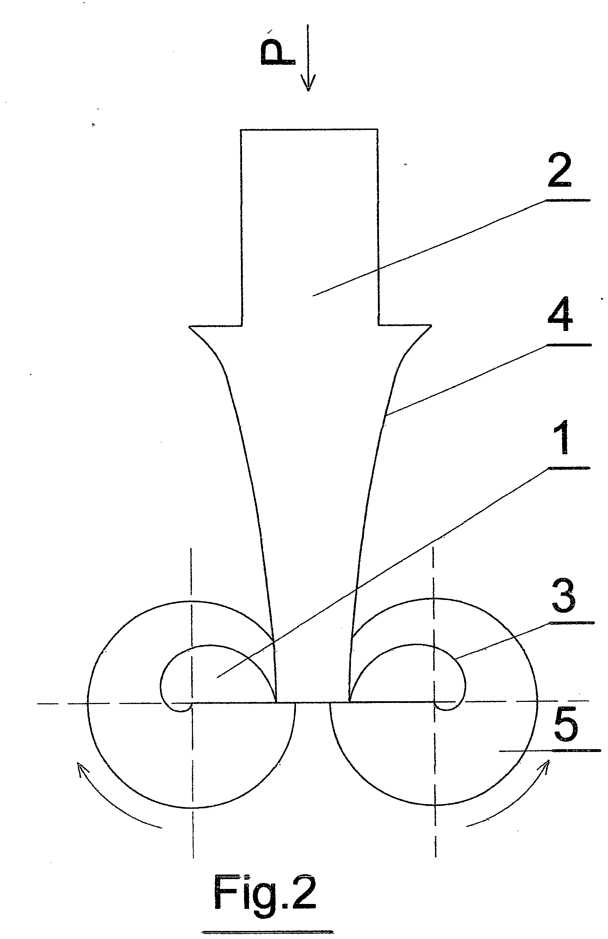

The subject of the invention is shown in the embodiments in the drawings in which Fig. 1 shows a single unit equipped with a gear set with a spiral-shaped outer surface and a second element whose mating surface has a parabola contour, whereas Fig. 2 presents the same device in a double system.

The apparatus for absorbing and transforming kinetic energy is provided with a gearbox (1, 2) which is assembled from an element (1) which has a peripheral surface with a spiral contour (3) and an element (2) which has a cooperating surface (4) with an outline of a parabola.

The device does not require cushioning elements, because in the initial phase of movement of element (2) there will be a slip on cooperating surfaces (3 and 4), while in the next phase of movement element 1 will smoothly accelerate and rotate.

The invention can be very widely used in many fields. It is possible to use the device in vehicles of various types and with different weights, but also in elements of road infrastructure, such as protective barriers. Other objects such as racetracks, port quays, airports, and trains can also be protected. The invention can be used in devices that reduce overloads such as seat belts, lift dampers, rescue screens in place of pneumatic airbags, and others.

## Claims

1. Device for absorbing and transforming kinetic energy of a moving object into the kinetic energy of a rotary motion in the event of collision or sudden stop, equipped with a buffer assembly and one or more rotors (5) introduced cumulatively in a rotary motion, **characterized in that** the rotation of the rotors (5) is carried out through a transmission consisting of two elements (1, 2), one (1) of which being coupled to the rotor (5) and having a peripheral surface (3) with a spiral contour, while the other one (2) has a cooperating surface (4) with an outline of a parabola or similar to a parabola shape.

2. Device according to claim 1, **characterized in that** the element (1) with a spiral contour (2) is coupled to the rotor (5) via a releasable one-way clutch.

3. Device according to claim 1, **characterized in that** the elements (1, 2) can be multiplied.

4. Device according to claim 1, **characterized in that** the rotation of the element (1) with a spiral contour (3) on the rotor (5) is affected by means of transmissions, preferably planetary gears.

## Patentansprüche

1. Die Vorrichtung zur Aufnahme und Umwandlung der kinetischen Energie eines sich bewegenden Objekts in kinetische Energie der Drehbewegung bei Kollision oder plötzlichem Anhalten, umfasst ein Anschlagssystem und einen oder mehrere Rotoren (5), welche aufsteigend zum Rotieren gebracht werden, **ist dadurch gekennzeichnet, dass** die Umdrehung von Rotoren (5) durch ein zwei Elemente (1,2) umfassendes Getriebe umgesetzt wird, wobei das eine (1) mit einem Rotor (5), der eine Umfangsfläche (3) von Spiralkontur aufweist, gekoppelt ist, und das zweite (2) eine parabolische oder einer Parabel ähnliche Gleit- und Lauffläche (4) aufweist.

2. Die Vorrichtung ist gemäß Anspruch 1 **dadurch gekennzeichnet, dass** das Element (1) mit Spiralkontur (2) mit dem Rotor (5) mittels einer schaltbaren Freilaufkupplung gekoppelt ist.

3. Die Vorrichtung ist gemäß Anspruch 1 **dadurch gekennzeichnet, dass** die Elemente (1, 2) multipliziert werden können.

4. Die Vorrichtung ist gemäß Anspruch 1 **dadurch gekennzeichnet, dass** die Umdrehung des Elements (1) mit Spiralkontur (3) auf den Rotor (5) über das Planetargetriebe günstig umgesetzt wird

**Revendications**

1. Mécanisme d'absorption et transformation d'énergie du mouvement linaire en énergie de mouvement rotationnel dans le cas d'une collision ou d'un arrêt brusque, équipé d'un pare -choc et d'un ou plusieurs rotors (5) amenés progressivement en rotation, la caractéristique étant que la rotation des rotors (5) est réalisée par un réducteur composé de deux éléments (1,2), l'un (1) est interconnecté avec le rotor (5) possédant une surface (3) circonférentielle en forme de spirale, le deuxième (2) possède une surface collaborant (4) d'une forme parabolique ou une surface très proche d'une parabole.

2. Mécanisme suivant la revendication 1, **caractérisé par le fait que** l'élément (1) de forme spirale (2) est interconnecté avec le rotor (5) par un embrayage démontable à sens unique.

3. Mécanisme suivant la revendication 1, **caractérisé par le fait que** les éléments (1,2) peuvent être multipliés.

4. Mécanisme suivant la revendication 1, **caractérisé par le fait que** la rotation de l'élément (1) avec contour en spirale (3) d'un rotor (5) est réalisée par un réducteur de préférence planétaire.

P

2

4

1

3

5

Fig.1

**Fig.2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2420674 A2
- PL 214514
- PL 356257